# EUROPEAN PATENT SPECIFICATION

(11) **EP 2 645 524 B1**
(45) Date of publication and mention of the grant of the patent: **14.10.2015**
(21) Application number: 12305374.6
(22) Date of filing: 30.03.2012
(51) Int. Cl.: H02J 7/00, G01R 31/36, H01M 10/44

(54) **Method and apparatus for battery charging**
Verfahren und Vorrichtung zum Laden von Batterien
Procédé et appareil de charge de batterie

(43) Date of publication of application: 02.10.2013
(73) Proprietor: EH Europe GmbH, 8001 Zürich (CH)
(72) Inventor: Kechmire, Mohammed, 62033 Arras (FR); Letome, David, 62033 Arras (FR)
(74) Representative: Williams, Rhys Nicholas

(56) References cited:
- EP-A1- 2 173 003
- EP-A2- 0 938 180

## Description

### Field of the Invention

The present invention concerns a method and apparatus for charging a battery. More particularly, but not exclusively, this invention concerns a method of charging a battery which adapts to the usage of the battery.

### Background of the Invention

In order to improve the lifetime performance of a battery, it may be necessary to alter the battery charging profile depending on the age, temperature, usage or other properties of the battery. Such arrangements are described in International Patent Publication Number WO 2011/015805 and WO 2011/015806. EP0938180 discloses a method and apparatus for controlling a battery charging device. Operating data of the accumulator is acquired continuously, and on the basis of the operating data, predefined parameters of the battery charging device are set. The present invention attempts to provide an alternative method of improving the lifetime performance of a battery.

### Summary of the Invention

The invention provides, according to a first aspect, a method of operating a battery comprising the following steps:
the battery undergoing a first series of charge/discharge cycles,
wherein the battery charging profile of the first series of charge/discharge cycles has a first regulation voltage;
monitoring the overall charge input and overall charge output during the first series of charge/discharge cycles and calculating the charge factor of the first series of charge/discharge cycles, the charge factor being the ratio of the overall charge input during the first series of charge/discharge cycles to the overall charge output during the first series of charge/discharge cycles;
the battery undergoing a second series of charge/discharge cycles,
wherein the battery charging profile of the second series of charge/discharge cycles has a second regulation voltage; the second regulation voltage being determined in dependence on the calculated charge factor of the first series of charge/discharge cycles.

The second regulation voltage may be the same as the first regulation voltage, or larger or smaller as detailed below.

The charge factor is the ratio of the charge input during a charging process or processes to the charge output discharged since the charging process or processes. The charge factor is a number equal to or preferably greater than one, representing the degree of overcharging required to return the lost amount of charge to the battery.

The method of operation may be used in order that the charge factor is maintained at a preset level, or within a preset range. If the charge factor of the first series of charge/discharge cycles is determined to be above a certain value, the regulation voltage of the second series of charge/discharge cycles may be reduced to less than the regulation voltage of the first series of charge/discharge cycles. If the charge factor of the first series of charge/discharge cycles is determined to be below a certain value, the regulation voltage of the second series of charge/discharge cycles may be increased to more than the regulation voltage of the first series of charge/discharge cycles. The first series and second series of charge/discharge cycles may each be a week long. Alternatively, the first series and second series of charge/discharge cycles may be restricted to a specific number of charge/discharge cycles, for example, 5, 10, or 15 charge/discharge cycles.

The invention may be applied to constant voltage charging systems. In a constant voltage charging system, the charging system applies a constant charging voltage to the battery. As the charging process begins, the current flow will be high, and as the battery charge increases, the current will reduce in line with the voltage of the battery increasing and the difference with the applied charging voltage decreasing.

The invention may be applied to a constant current charging system. In a constant current charging system, the charging system adjusts the voltage applied to the battery in order to maintain a constant current into the battery.

The invention may be applied to a hybrid system, which is a combination of a constant voltage charging system and a constant current charging system. Typically, in a hybrid charging system a constant voltage is applied until the battery is mostly charged, and then a constant current is applied for a set period of time. Alternatively, the hybrid charging system may apply a constant current for the first part of the charge, and then a constant voltage for the second part of the charge.

The regulation voltage may be the constant voltage applied by a constant voltage charging system. The regulation voltage may be the maximum voltage applied by a constant current charging system. The regulation voltage may be the constant voltage or maximum voltage applied by a hybrid charging system. The regulation voltage is preferably applied for a minimum period of time during the charging process. The minimum period of time may be 10, 20, or 30 minutes.

The person skilled in the art will appreciate that various different charging systems are available, and that the invention may be applied to any suitable charging system.

The battery charging system may be determined by an algorithm stored on a microprocessor, the microprocessor being part of the battery charger or the battery itself.

The battery may comprise a device configured to monitor and record data relating to the battery charge/discharge cycles. This data may include the current input during charging and the current output during use, the voltage of the battery, the temperature of the battery, or the electrolyte level of the battery if appropriate. This data may be wirelessly downloaded to the battery charging station when the battery is brought to the battery charging station for a charge. Alternatively, the data may be downloaded by a wired connection between the battery charging station and the battery. The device may be configured to calculate the charge factor during a series of charge/discharge cycles and communicate the appropriate regulation voltage to the battery charging station in order to control the charging process.

A wireless battery control device suitable for use in the invention could be the commercially available WI-IQ device. The WI-IQ device is available from EnerSys EMEA, EH Europe GmbH, Lowenstrasse 32, 8001 Zurich, Switzerland and additional EnerSys sales entities across the world.

The preferred charge factor or charge factor range will depend on the type of battery being used. The charge factor may be in the range of from 1.01 to 1.40, or in the range of from 1.03 to 1.15. When the battery is a thin plate pure lead battery, the charge factor is preferably in the range of from 1.03 to 1.05. Where the battery is a flooded lead acid battery, the charge factor is preferably in the range of from 1.10 to 1.15. Where the battery is a gelled lead acid battery, the charge factor is preferably in the range of from 1.05 to 1.08.

The charging factor range may be determined by testing the battery type in question to determine the optimum range for extending battery lifetime and improving battery performance.

The method of operation allows the regulation voltage and charging profile to be adapted in dependence on the actual usage of the battery and may provide better battery performance that adjusting the charging profile in dependence simply on the age or number of charge/discharge cycles of the battery.

The method of operation may be repeated during the lifetime of the battery in order that the charge factor is always maintained within a certain range, or if the charge factor strays outside of that range, the regulation voltage is adjusted to bring it back to the preferred range.

The method of operation may comprise calculating a weekly charge factor and adjusting the regulation voltage of the charging profile at the beginning of each week. The charge input and charge output values may be reset each week, thus avoiding any drift during each series of charge/discharge cycles.

The charge/discharge cycles comprise a cycle in which the battery is at least partially charged and at least partially discharged. The charge/discharge cycles may, for example, be experienced by a battery for a forklift truck being used in a normal operation mode. The battery may be charged before use, the battery is then discharged as the forklift truck is operated. The charging process may comprise a partial, opportunity charge, undertaken during a break in operation of the forklift truck.

The method of operation may include an additional charge between the first series of charge/discharge cycles and second series charge/discharge cycles. The additional charge may be an equalisation charge. An equalisation charge may be applied to the battery in addition to or in combination with the first series and second series of charge/discharge cycles.

The second regulation voltage may be adjusted in dependence on the charge factor of the first set of charge/discharge cycles in a fixed manner. For example, if the charge factor is determined to be too high, the regulation voltage may be reduced by a fixed amount. If the charge factor is determined to be too low, the regulation voltage may be increased by a fixed amount.

For example, the preferred charging factor range for a pure lead acid battery may be of from 1.03 and 1.05. The battery may be made up of a plurality of 2V cells. If the charging factor is less than 1.03, the regulation voltage may be increased 10mV per cell. If the charging factor is greater than 1.05, the regulation voltage may be decreased 10mV per cell (mVpc).

The method and apparatus as described above has been confined to the regulation voltage being set in dependence on the charge factor of a battery over a series of charge/discharge cycles. However, the parameters of the charging process are not necessarily limited to being exclusively determined based on the charge factor value. Additional criteria may be used to determine the optimum charging profile for a battery, including a current limit and battery temperature during charging.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows an example charge/discharge profiles during a series of charge/discharge cycles;
Figure 2 shows a charging profile as used in part of the charge/discharge cycles shown in figure 1;
Figure 3 shows a charging profile including an equalisation charge as shown in figure 1; and
Figure 4 shows a flow diagram of the steps undertaken during the method.

### Detailed Description

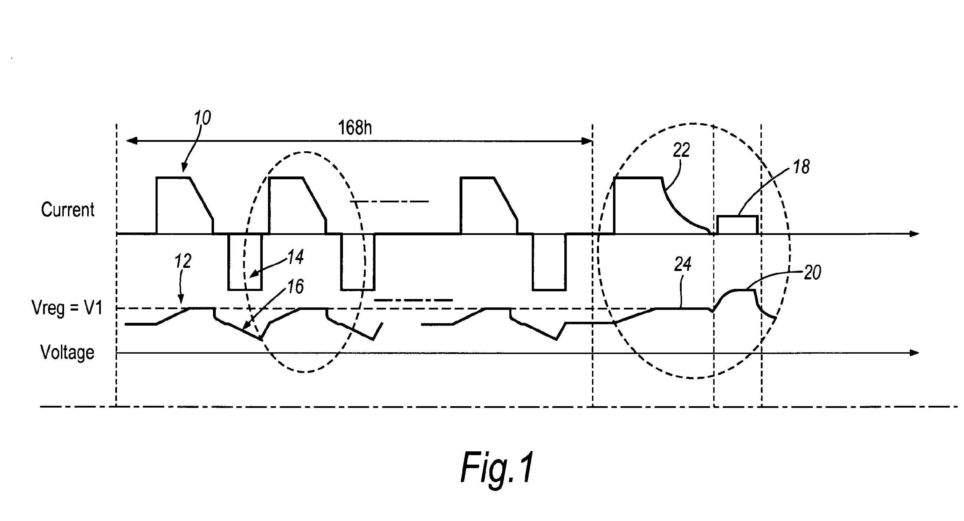

Figure 1 shows an example charge/discharge profile of a lead acid battery, the lead acid battery comprising a plurality of 2V cells. In this particular embodiment, a hybrid charging system is being used, with the current being kept constant for the beginning of the charge, and then the voltage being kept constant, at the regulation voltage V1, while the current is allowed to drop. In the example shown, V1 = 2.40 Vpc. A charging period is indicated by the arrows 10 and 12. The profile also shows the discharge period, where the current output is constant and the discharge voltage drops over time, as indicated by the arrows 14 and 16. The first set of charge/discharge cycles takes place over 168 hours (1 week), at the end of which an equalisation charge is applied to the battery. The equalisation charge comprises an additional charge 18, 20, applied to the battery after a full charging cycle 22, 24, has been undertaken.

At the end of the first series of charge/discharge cycles, the charge factor for the week is calculated. The charge factor is the ampere hours input into the battery during charging, divided by the ampere hours output by the battery during use. In this arrangement, if the charging factor is greater than 1.05, the regulation voltage for the second series of charge/discharge cycles is set as V1 - 10mV per cell. If the charge factor is less than 1.03, the regulation voltage for the second set of charge/discharge cycles is set as V1 + 10mV per cell. If the charge factor is between 1.03 and 1.05, the regulation voltage for the second series of charge/discharge cycles is maintained at V1. The second series of charge/discharge cycles, and equalisation charge, will have approximately the same profile as the first series, with the regulation voltage adjusted as required by the charging factor.

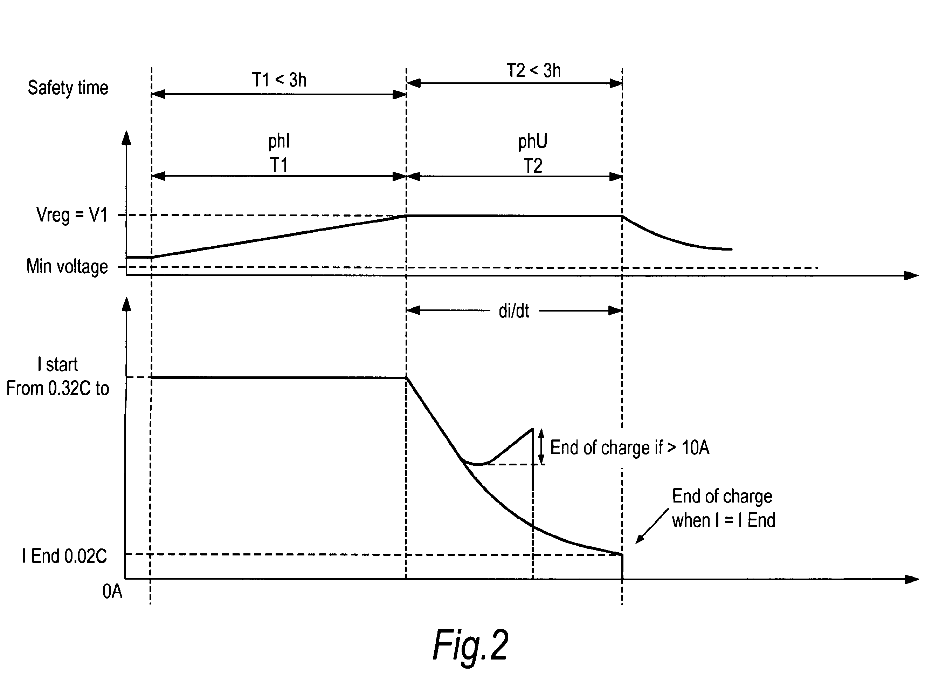

Figure 2 shows an expanded view of one of the charging cycles of the first series of charge/discharge cycles. Initially, for a period T1 of less than 3 hours, the charging current is set to be constant. In order to keep the current constant, the voltage is gradually increased up to the level V1 (the regulation voltage). When the regulation voltage is reached, the voltage remains constant and the current drops as the battery becomes more fully charged. This takes place over the period T2, which is also less than three hours. The battery may then be discharged as shown in figure 1 before being charged again as the charge/discharge cycle is repeated.

The charging time depends on the charging rate and the battery capacity and may be varied as appropriate as will be appreciated by a skilled person.

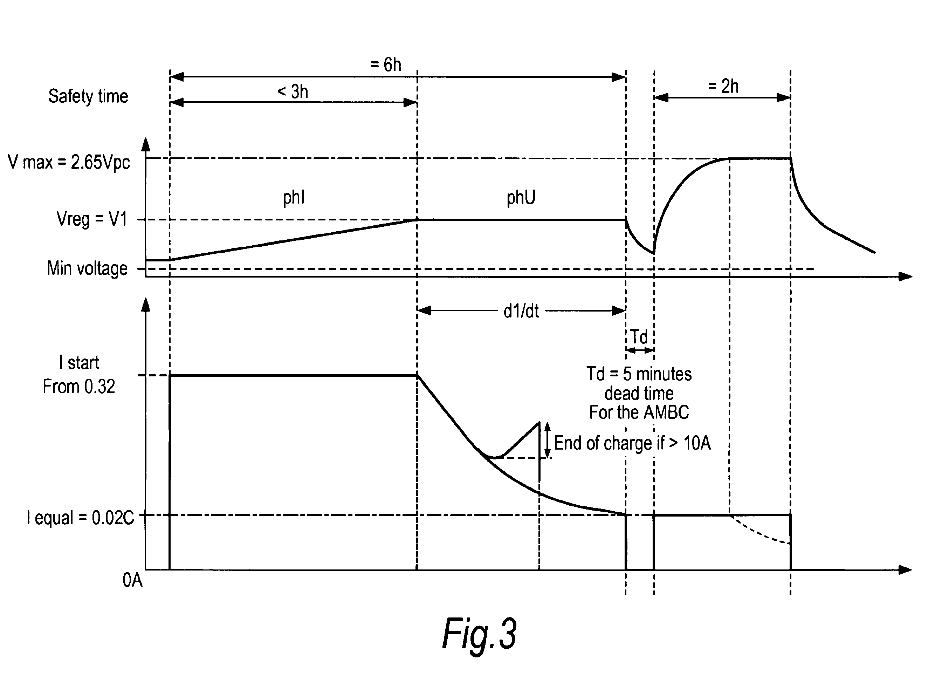

Figure 3 shows an expanded view of the charging process including an equalisation charge. The initial charging step is approximately the same as described for figure 2. However, this is followed by an equalisation charge with a constant current and a maximum voltage (Vmax) of 2.65Vpc. As can be seen, Vmax is greater than Vreg.

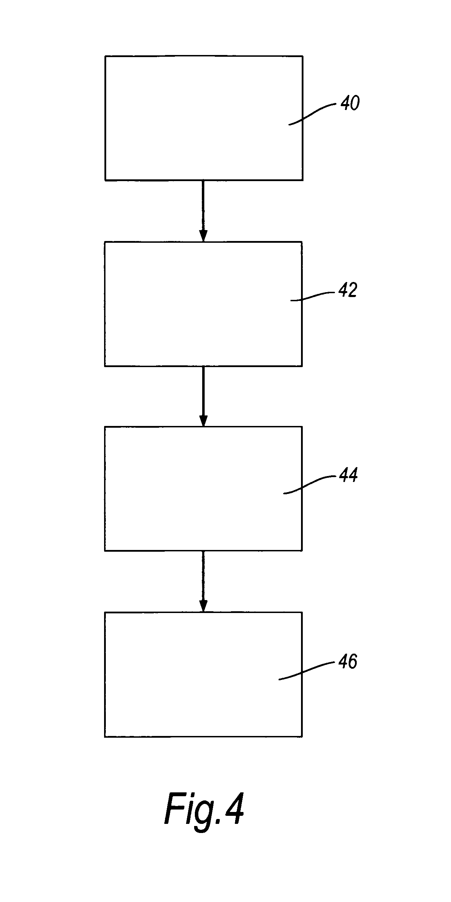

Figure 4 shows the method of battery operation, where initially the battery undergoes a first series of charge/discharge cycles 40, where the charging profile has a first regulation voltage. The overall charge input and overall charge output during the first series of charge/discharge cycles is monitored and the charge factor of the first series of charge/discharge cycles is calculated 42. Depending on the calculated charge factor, a second regulation voltage is determined 44, which may be the same, higher, or lower, than the first regulation voltage. A second series of charge/discharge cycles are then performed 46. The process is repeated throughout the lifetime of the battery, such that the charge factor may be constantly adjusted in order to maximise the performance and lifetime of the battery being charged.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of operating a battery comprising the following steps:
the battery undergoing a first series of charge/discharge cycles, wherein the battery charging profile of the first series of charge/discharge cycles has a first regulation voltage (40);
monitoring the overall charge input and overall charge output during the first series of charge/discharge cycles and calculating the charge factor of the first series of charge/discharge cycles (42), the charge factor being the ratio of the overall charge input during the first series of charge/discharge cycles to the overall charge output during the first series of charge/discharge cycles;
the battery undergoing a second series of charge/discharge cycles, wherein the battery charging profile of the second series of charge/discharge cycles has a second regulation voltage (46);
the second regulation voltage being determined in dependence on the calculated charge factor of the first series of charge/discharge cycles (44).

2. A method according to claim 1, wherein the regulation voltage is set in order to keep the charge factor of the second series of charge/discharge cycles at a preset value, or within a preset range of values.

3. A method according to claim 1 or claim 2, wherein if the charge factor of the first series of charge/discharge cycles is determined to be above a certain value, the regulation voltage for the second series of charge/discharge cycles is reduced to lower than the first regulation voltage.

4. A method according to any of claims 1 to 3, wherein if the charge factor for the first series of charge/discharge cycles is determined to be below a certain value, the regulation voltage for the second series of charge/discharge cycles is increased to higher than the first regulation voltage.

5. A method according to any of claims 1 to 4, wherein the charge/discharge cycles comprise a constant current charging profile.

6. A method according to any of claims 1 to 4, wherein the charge/discharge cycles comprise a constant voltage charging profile.

7. A method according to any of claims 1 to 4, wherein the charge/discharge cycles comprise a hybrid charging profile.

8. A method as claimed in any preceding claim, wherein the battery comprises a device configured to monitor and record data relating to the battery charge/discharge cycles.

9. A method as claimed in claim 8, wherein the device configured to monitor and record data relating to the battery charge/discharge cycles sends the data to the battery charging station connected to the battery during a battery charging process.

10. A method as claimed in any preceding claim, including the step of performing an additional charge between the first series of charge/discharge cycles and second series charge/discharge cycles.

11. A method as claimed in claim 10, wherein the additional charge is an equalisation charge.

## Patentansprüche

1. Ein Verfahren zum Bedienen einer Batterie, umfassend die folgenden Schritte:
Durchführen einer ersten Reihe von Batterielade-/Batterieentladezyklen, wobei das Batterieladeprofil der ersten Reihe von Lade-/Entladezyklen eine erste Regelspannung aufweist (40),
Überwachen des Gesamtladungseingangs und Gesamtladungsausgangs während der ersten Reihe von Lade-/Entladezyklen und Berechnen des Ladefaktors der ersten Reihe von Lade-/Entladezyklen (42), wobei der Ladefaktor das Verhältnis des Gesamtladungseingangs während der ersten Reihe von Lade-/Entladezyklen zum Gesamtladungsausgang während der ersten Reihe von Lade-/Entladezyklen ist,
Durchführen einer zweiten Reihe von Batterielade-/Batterieentladezyklen, wobei das Batterieladeprofil der zweiten Reihe von Lade-/Entladezyklen eine zweite Regelspannung aufweist (46),
wobei die zweite Regelspannung in Abhängigkeit von dem berechneten Ladefaktor der ersten Reihe von Lade-/Entladezyklen bestimmt wird (44).

2. Ein Verfahren nach Anspruch 1, wobei die Regelspannung eingestellt wird, um den Ladefaktor der zweiten Reihe von Lade-/Entladezyklen auf einem vorgegebenen Wert oder innerhalb eines vorgegebenen Wertebereichs zu halten.

3. Ein Verfahren nach Anspruch 1 oder Anspruch 2, wobei die Regelspannung für die zweite Reihe von Lade-/Entladezyklen auf einen Wert unterhalb der ersten Regelspannung reduziert wird, falls bestimmt wird, dass der Ladefaktor der ersten Reihe von Lade-/Entladezyklen über einem bestimmten Wert liegt.

4. Ein Verfahren nach einem der Ansprüche 1 bis 3, wobei die Regelspannung für die zweite Reihe von Lade-/Entladezyklen auf einen Wert oberhalb der ersten Regelspannung erhöht wird, falls bestimmt wird, dass der Ladefaktor für die erste Reihe von Lade-/Entladezyklen unter einem bestimmten Wert liegt.

5. Ein Verfahren nach einem der Ansprüche 1 bis 4, wobei die Lade-/Entladezyklen ein Konstantstromladeprofil umfassen.

6. Ein Verfahren nach einem der Ansprüche 1 bis 4, wobei die Lade-/Entladezyklen ein Konstantspannungsladeprofil umfassen.

7. Ein Verfahren nach einem der Ansprüche 1 bis 4, wobei die Lade-/Entladezyklen ein hybrides Ladeprofil umfassen.

8. Ein Verfahren nach einem der vorangehenden Ansprüche, wobei die Batterie eine Vorrichtung umfasst, die für das Überwachen und Aufzeichnen von die Batterielade-/Batterieentladezyklen betreffenden Daten konfiguriert ist.

9. Ein Verfahren nach Anspruch 8, wobei die Vorrichtung, die für das Überwachen und Aufzeichnen von die Batterielade-/Batterieentladezyklen betreffenden Daten konfiguriert ist, die Daten an die Batterieladestation sendet, die während eines Batterieladevorgangs mit der Batterie verbunden ist.

10. Ein Verfahren nach einem der vorangehenden Ansprüche, einschließend den Schritt des Durchführens eines zusätzlichen Ladens zwischen der ersten Reihe von Lade-/Entladezyklen und der zweiten Reihe von Lade-/Entladezyklen.

11. Ein Verfahren nach Anspruch 10, wobei die zusätzliche Ladung eine Ausgleichsladung ist.

## Revendications

1. Procédé destiné à exploiter une batterie comportant les étapes suivantes consistant à :
soumettre la batterie à une première série de cycles de charge / de décharge, dans lequel le profil de charge de la batterie de la première série de cycles de charge / de décharge, présente une première tension de régulation (40) ;
surveiller l'entrée de charge globale et la sortie de charge globale au cours de la première série de cycles de charge / de décharge et calculer le facteur de charge de la première série de cycles de charge / de décharge (42), le facteur de charge étant le rapport de l'entrée de charge globale au cours de la première série de cycles de charge / de décharge, sur la sortie de charge globale au cours de la première série de cycles de charge / de décharge ;
soumettre la batterie à une seconde série de cycles de charge / de décharge, dans lequel le profil de charge de la batterie de la seconde série de cycles de charge / de décharge, présente une seconde tension de régulation (46) ;
la seconde tension de régulation étant déterminée selon le facteur de charge calculé pour la première série de cycles de charge / de décharge (44).

2. Procédé selon la revendication 1, dans lequel la tension de régulation est fixée de façon à maintenir le facteur de charge de la seconde série de cycles de charge / de décharge à une valeur présélectionnée, ou à l'intérieur d'une plage de valeurs présélectionnée.

3. Procédé selon la revendication 1 ou la revendication 2, dans lequel, si le facteur de charge de la première série de cycles de charge / de décharge est déterminé comme se situant au-dessus d'une certaine valeur, la tension de régulation de la seconde série de cycles de charge / de décharge est réduite à une tension inférieure à la première tension de régulation.

4. Procédé selon l'une quelconque des revendications 1 à 3, dans lequel, si le facteur de charge de la première série de cycles de charge / de décharge est déterminé comme se situant en dessous d'une certaine valeur, la tension de régulation de la seconde série de cycles de charge / de décharge est augmentée à une tension supérieure à la première tension de régulation.

5. Procédé selon l'une quelconque des revendications 1 à 4, dans lequel les cycles de charge / de décharge comprennent un profil de charge à courant constant.

6. Procédé selon l'une quelconque des revendications 1 à 4, dans lequel les cycles de charge / de décharge comprennent un profil de charge à tension constante.

7. Procédé selon l'une quelconque des revendications 1 à 4, dans lequel les cycles de charge / de décharge comprennent un profil de charge hybride.

8. Procédé selon l'une quelconque des revendications précédentes, dans lequel la batterie comprend un dispositif configuré de façon à surveiller et à enregistrer des données qui se rapportent aux cycles de charge / de décharge de la batterie.

9. Procédé selon la revendication 8, dans lequel le dispositif configuré de façon à surveiller et à enregistrer des données qui se rapportent aux cycles de charge / de décharge de la batterie, envoie les données à la station de charge de la batterie connectée à la batterie au cours d'un processus de charge de la batterie.

10. Procédé selon l'une quelconque des revendications précédentes, comprenant une étape consistant à exécuter une charge supplémentaire entre la première série de cycles de charge / de décharge et la seconde série de cycles de charge / de décharge.

11. Procédé selon la revendication 10, dans lequel la charge supplémentaire est une charge d'égalisation.
